# EUROPÄISCHE PATENTSCHRIFT

(11) **EP 2 995 394 B1**
(45) Veröffentlichungstag und Bekanntmachung des Hinweises auf die Patenterteilung: **07.09.2016**
(21) Anmeldenummer: 14003140.2
(22) Anmeldetag: 11.09.2014
(51) Int. Cl.: B21D 22/16, B23P 17/00

(54) **Verfahren und Vorrichtung zum Umformen eines Werkstücks**
Device and method for forming a workpiece
Procédé et dispositif destinés à former une pièce à usiner

(43) Veröffentlichungstag der Anmeldung: 16.03.2016
(73) Patentinhaber: REPKON Machine and Tool Industry and Trade Inc., 34726 Kalamis - Istanbul (TR)
(72) Erfinder: Köstermeier, Karl-Heinz, 33378 Rheda-Wiedenbrück (DE)
(74) Vertreter: Thielking & Elbertzhagen Patentanwälte Partnerschaft mbB

(56) Entgegenhaltungen:
- DE-A1- 2 327 664
- DE-A1- 19 913 091
- DE-A1-102012 008 005
- RU-C1- 2 356 675
- US-A- 5 428 980

## Beschreibung

Die Erfindung betrifft ein Verfahren und eine Vorrichtung zum Umformen eines hohlen und im wesentlichen rotationssymmetrischen Werkstücks.

Verfahren der in Rede stehenden Art sind aus dem Stand der Technik bekannt und werden dort als Drückwalzverfahren bezeichnet. Regelmäßig ist es das Ziel dieses Verfahrens, einen im wesentlichen rotationssymmetrischen Hohlkörper, beispielsweise einen rohrförmigen Hohlkörper, umzuformen, wobei sich dessen Durchmesser und dessen Wandstärke infolge der plastischen Umformung verringern. Infolge der Verringerung von Durchmesser und Wandstärke kommt es dabei regelmäßig zu einer Zunahme der Länge des Hohlkörpers entlang seiner Rotationssymmetrieachse, d. h. in axialer Richtung. Dabei wird die Umformung des hohlkörperförmigen Werkstücks bei Verfahren und Vorrichtungen der in Rede stehenden Art dadurch ermöglicht, dass ein Umformwerkzeug an der Außenkontur des Werkstücks angreift, während das Werkstück um eine Rotationsachse, die im Rahmen der Fertigungstoleranzen des Werkstücks der Rotationssymmetrieachse des Werkstücks entspricht, rotiert. Durch plastische Verformung wird der Werkstoff des Werkstücks zunächst durch die äußeren Umformwerkzeuge auf das innere Umformwerkzeug zu verdrängt, bis die Bewegung des Werkstoffs durch das innere Umformwerkzeug behindert wird.

Infolge dessen kommt es zu einem plastischen Materialfluss mit drei Bewegungskomponenten, nämlich einer axialen, d. h. parallel zur Rotationsachse orientierten, einer radialen, d. h. auf die Rotationsachse zu gerichteten und einer zu diesen beiden Richtungen senkrechten in Umfangsrichtung gerichteten Bewegungskomponente des fließenden Werkstoffs. Aufgrund der axialen Bewegungskomponente längt sich das Werkstück während der plastischen Umformung.

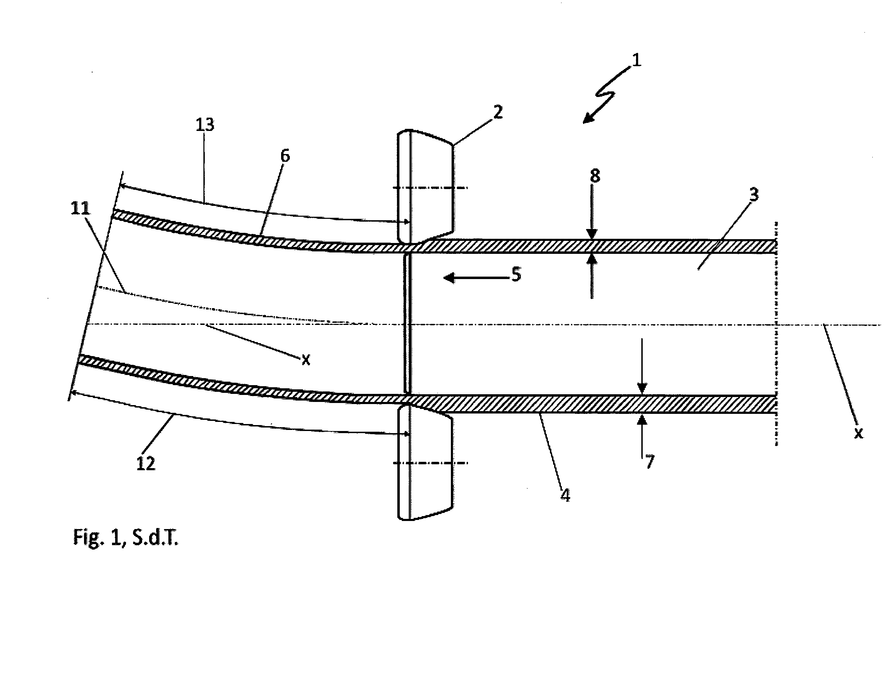

Der Nachteil derartiger Umformverfahren ist, dass hohe Anforderungen an die Gleichmäßigkeit der Wandstärke der eingesetzten Werkstücke in Umfangsrichtung bestehen. Weist die Wandstärke der zu verarbeitenden Werkstoffe eine zu große Unregelmäßigkeit in Umfangsrichtung auf, so kommt es zu dem in der Figur 1 dargestellten, sogenannten Peitschenarmeffekt. Das umgeformte Werkstück verzieht sich derart, dass seine Mittellinie von der Rotationsachse abweicht und einen gekrümmten Verlauf annimmt. Dies führt zu einer Unwucht, die regelmäßig den Abbruch des Prozesses erzwingt.

Das Auftreten dieses sogenannten Peitschenarmeffekts bei der Verarbeitung von Werkstücken, die in Umfangsrichtung eine zu hohe Unregelmäßigkeit der Wandstärke aufweisen, ist bei den in Rede stehenden Verfahren in der Praxis bisher ein ungelöstes Problem.

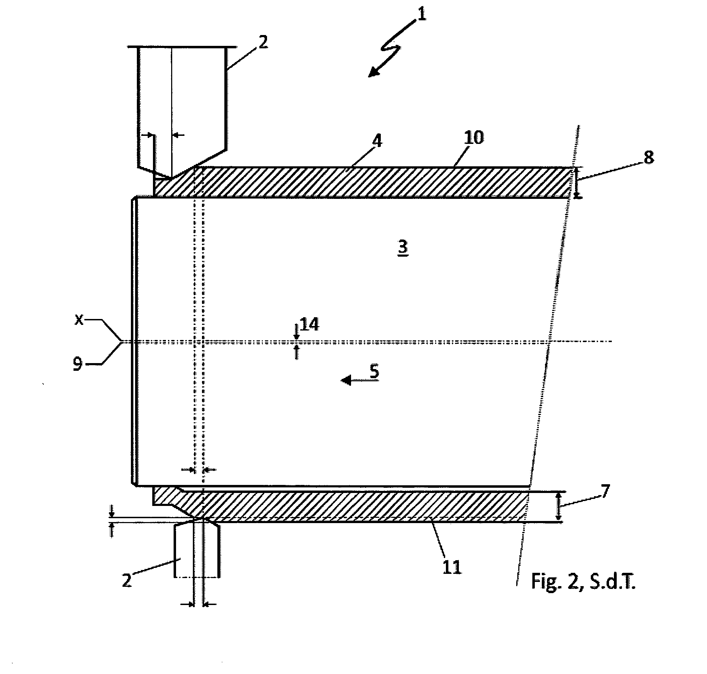

Auch durch modifizierte Vorrichtungen, die beispielsweise - wie dies in Figur 2 dargestellt ist - zusätzliche Umformwerkzeuge aufweisen, gelingt die Durchführung der in Rede stehenden Umformverfahren nicht, wenn die Anforderungen an die Gleichmäßigkeit der Wandstärke in Umfangsrichtung durch die umzuformenden Werkstücke nicht erfüllt werden.

Der Erfindung liegt daher die Aufgabe zugrunde, ein Verfahren und eine Vorrichtung der in Rede stehenden Art aufzuzeigen, welche die Verarbeitung von Werkstücken mit größeren Unregelmäßigkeiten der Wandstärke ermöglichen als dies nach dem Stand der Technik der Fall ist.

Gelöst wird diese Aufgabe durch eine Vorrichtung und ein Verfahren mit den Merkmalen der unabhängigen Ansprüche.

Das erfindungsgemäße Verfahren sieht vor, dass während der Umformung eine spanabhebende Bearbeitung eines noch umzuformenden Bereichs des Werkstücks erfolgt. Die erfindungsgemäße Vorrichtung ist entsprechend derart gestaltet, dass ein spanabhebendes Werkzeug der Vorrichtung zeitgleich mit dem Umformwerkzeug an der Außenkontur des Werkstücks angreifen kann.

Es hat sich gezeigt, dass der unerwünschte sogenannte Peitschenarmeffekt darauf beruht, dass eine ungleichmäßige Wanddicke des umzuformenden Werkstücks in Umfangsrichtung zu einem verstärkten Materialfluss in axialer Richtung im Bereich der größten Wanddicke und damit zu einer verstärkten Längenzunahme in dem entsprechenden Bereich des Werkstücks während der Umformung führt. Zwar wird in der Umfangszone auch ein Materialfluss in Umfangsrichtung erzeugt, wenn die Unregelmäßigkeiten in der Wanddicke jedoch zu groß werden, kann dieser jedoch nicht mehr dafür ausreichen, eine Gleichverteilung des Werkstoffs um den Umfang während der Umformung herbeizuführen. Der entsprechende überflüssige Werkstoff kann dann in der spaltförmigen Umformzone zwischen äußerem und innerem Umformwerkzeug nur noch in axialer Richtung dem Umformdruck ausweichen, was zu der bereits beschriebenen Verkrümmung des umgeformten Werkstücks führt.

Das äußere Umformwerkzeug, bei dem es sich vorzugsweise um eine Umformrolle handelt, ist in axialer Richtung, vorzugsweise im Endbereich des inneren Umformwerkzeugs angeordnet. Dieses innere Umformwerkzeug kann vorteilhafterweise als Innendorn ausgestaltet sein, um den herum das umzuformende Werkstück bei Beginn der Umformung angeordnet ist. Das vorzugsweise freie Ende des Dorns bildet dabei vorzugsweise das Widerlager für den Umformprozess, d. h. es stellt die Fläche zur Verfügung, gegen den die Innenkontur des umzuformenden Werkstücks während der Umformung gedrückt wird.

Vorzugsweise wird bei der Durchführung des erfindungsgemäßen Verfahrens zunächst ein erster Teilbereich des Werkstücks in axialer Richtung, vorzugsweise ein Endbereich, derart umgeformt, dass der umgeformte Teilbereich in Anlage an das innere Umformwerkzeug gelangt. Hierdurch wird die Position dieses Endbereichs des umzuformenden Werkstücks relativ zum inneren Umformwerkzeug festgelegt und der auf diese Weise angeformte Bereich des Werkstücks kann die bei der im Folgenden einsetzenden spanenden Bearbeitung entstehenden Reaktionskräfte besser aufnehmen und in die Umformwerkzeuge einleiten.

Die Erfindung wird im Folgenden anhand der Figuren 1 bis 3 schematisch näher erläutert.
- Figur 1: - zeigt eine schematische Darstellung eines Umformverfahrens nach dem Stand der Technik,
- Figur 2: - zeigt eine Umformvorrichtung nach dem Stand der Technik in einer schematischen Schnittdarstellung,
- Figur 3: - zeigt eine beispielhafte erfindungsgemäße Vorrichtung in einer schematischen Schnittdarstellung.

Die erfindungsgemäße Vorrichtung 1 weist ebenso wie die dargestellten Vorrichtungen 1 nach dem Stand der Technik mindestens ein äußeres Umformwerkzeug 2 und ein inneres Umformwerkzeug 3 auf. Die gezeigten beispielhaften äußeren Umformwerkzeuge 2 sind in vorteilhafter Weise als Umformrollen gestaltet. Das innere Umformwerkzeug 3 ist im gezeigten Beispiel als Innendorn gestaltet. Die hohlkörperförmige, im wesentlichen rotationssymmetrische Gestalt des Werkstücks, die im gezeigten Beispiel in vorteilhafter Weise rohrförmig ist, ermöglicht es, das umzuformende Werkstück 4 zu Beginn des Verfahrens um das innere Umformwerkzeug herum anzuordnen.

Bei der Durchführung des Umformverfahrens wird das umzuformende Werkstück 4 relativ zu dem äußeren Umformwerkzeug 2 in Rotation um die Rotationsachse X versetzt. Durch eine Bewegung des umzuformenden Werkstücks 4 in Vorschubrichtung 5 wird das umzuformende Werkstück 4 zwischen äußerem Umformwerkzeug 2 und innerem Umformwerkzeug 3 hindurchgedrückt. Durch die Überlagerung der Vorschubbewegung 5 und die Rotation um die Achse X ergibt sich dabei eine spiralförmige Bahn, die das Umformwerkzeug 2 relativ zu dem umzuformenden Werkstück 4 beschreibt.

Durch die Umformung nimmt die Länge des umgeformten Werkstücks 6 im Vergleich zu dem umzuformenden Werkstück 4 zu.

Im gezeigten Beispiel ist eine erste Wanddicke 7 des umzuformenden Werkstücks 4 größer als eine zweite Wanddicke 8 des umzuformenden Werkstücks 4, wobei die Bereiche mit der ersten Wanddicke 7 und der zweiten Wanddicke 8 in Umfangsrichtung zueinander versetzt sind.

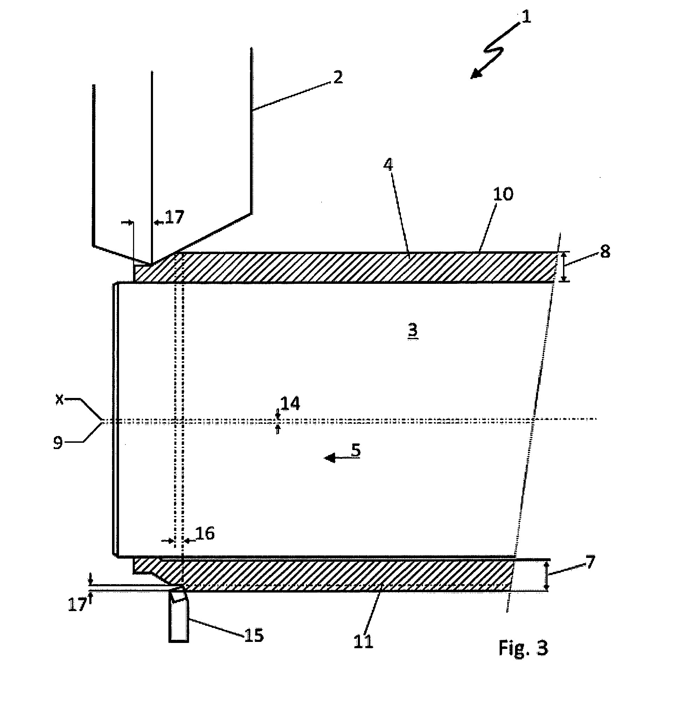

Die Unterschiede zwischen den Wanddicken 7 und 8 führen zu einer Exzentrizität des umzuformenden Werkstücks 4, die dazu führt, dass die Mittellinie 9 der Außenkontur 10 des umzuformenden Werkstücks 4 nicht mit der Rotationsachse X zusammenfällt. Bei der Umformung kommt es bei bekannten Verfahren zu dem in Figur 1 dargestellten Peitschenarmeffekt, bei dem die Mittellinie 11 des umgeformten Werkstücks 6 einen gekrümmten Verlauf annimmt, da die Länge 12 des umgeformten Bereichs mit der ersten Wanddicke 7 größer ist als die Länge 13 des umgeformten Bereichs mit der zweiten Wanddicke 8. Der Effekt tritt in umso stärkeren Maße auf als die Mittellinie 9 der Außenkontur 10 des umzuformenden Werkstücks 4 von der Rotationsachse X abweicht, wie es in den Figuren 2 und 3 durch den Abstand 14 dargestellt ist.

Die erfindungsgemäße Vorrichtung weist nun ein spanabhebendes Werkzeug 15 auf, das an der Außenkontur 10 des umzuformenden Werkstücks 4 angreift. Dieses Werkzeug ist in einem axialen Abstand 16 zu dem Bereich, an dem das äußere Umformwerkzeug 2 an der Außenkontur 10 des umzuformenden Werkstücks 4 angreift, angeordnet. Im gezeigten Beispiel ist das Umformwerkzeug so eingestellt, dass es im Bereich der niedrigsten Wanddicke in Umfangsrichtung, d. h. im gezeigten Beispiel im Bereich mit der Wanddicke 8, gerade die Außenkontur 10 berührt, während es im Bereich des übrigen Umfangs einen Span, im Bereich mit der ersten Wanddicke 7 einen Span mit der Dicke 17, abhebt.

Bei der Durchführung des erfindungsgemäßen Verfahrens kann es sinnvoll sein, einen gewissen Bereich des umzuformenden Werkstücks 4 zunächst umzuformen, ohne dass das spanabhebende Werkzeug 15 das umzuformende Werkstück 4 spanabhebend bearbeitet. Im gezeigten Beispiel ist dies der axiale Bereich 17, dessen Ausdehnung in axialer Richtung vorzugsweise mindestens 1 und/oder höchstens 10 mm beträgt.

### Bezugszeichenliste:

- 1.: Vorrichtung
- 2.: äußeres Umformwerkzeug
- 3.: inneres Umformwerkzeug
- 4.: umzuformendes Werkstück
- 5.: Vorschubrichtung
- 6.: umgeformtes Werkstück
- 7.: erste Wanddicke
- 8.: zweite Wanddicke
- 9.: Mittellinie
- 10.: Außenkontur
- 11.: Mittellinie
- 12.: Länge
- 13.: Länge
- 14.: Abstand
- 15.: spanabhebendes Werkzeug
- 16.: axialer Abstand
- 17.: axialer Bereich

- X: Rotationsachse

## Patentansprüche

1. Vorrichtung (1) zum Umformen eines hohlen und zumindest im Wesentlichen rotationssymmetrischen Werkstücks (4), mit einem inneren Umformwerkzeug (3) zur Abstützung einer Innenkontur des Werkstücks (4) und einem äußeren Umformwerkzeug (2) zur Einleitung einer Umformkraft in eine Außenkontur (10) des Werkstücks (4), wobei das Werkstück (4) relativ zu dem äußeren Umformwerkzeug (2) um eine Rotationsachse (X) rotierbar ist,
**dadurch gekennzeichnet,**
**dass** die Vorrichtung (1) ein spanabhebendes Werkzeug (15) aufweist und derart gestaltet ist, dass das spanabhebende Werkzeug (15) zeitgleich mit dem Umformwerkzeug (2) an der Außenkontur (10) des Werkstücks (4) angreifen kann.

2. Vorrichtung (1) nach Anspruch 1,
**dadurch gekennzeichnet,**
**dass** das Umformwerkzeug (2) eine Umformrolle aufweist.

3. Vorrichtung (1) nach Anspruch 1 oder 2,
**dadurch gekennzeichnet,**
**dass** das Umformwerkzeug (2), insbesondere die Umformrolle, eine Oberfläche zum Übertragen der Umformkräfte auf das Werkstück (4) aufweist, die derart gestaltet ist, dass durch die axiale Bewegung des Werkstücks (4) relativ zum äußeren Umformwerkzeug (2) eine zunehmende Verdrängung des Werkstoffs des Werkstücks (4) zum inneren Umformwerkzeug (3) hin bewirkt wird.

4. Vorrichtung (1) nach einem der vorigen Ansprüche,
**dadurch gekennzeichnet,**
**dass** die Vorrichtung (1) eine Mehrzahl, vorzugsweise im Bezug auf das innere Umformwerkzeug (3) gegenüberliegend angeordnete, äußere Umformwerkzeuge (2) aufweist.

5. Vorrichtung (1) nach einem der vorigen Ansprüche,
**dadurch gekennzeichnet,**
**dass** die Vorrichtung (1) eine Spanabsaugvorrichtung zur Absaugung der an dem spanabhebenden Werkzeug (15) anfallenden Späne aufweist.

6. Vorrichtung (1) nach einem der vorigen Ansprüche,
**dadurch gekennzeichnet,**
**dass** die Vorrichtung (1) eine Kühlmitteleinrichtung zur Applikation eines Kühlmittels im Wirkungsbereich des Umformwerkzeugs und/oder des spanabhebenden Werkzeugs aufweist.

7. Vorrichtung (1) nach einem der vorigen Ansprüche,
**dadurch gekennzeichnet,**
**dass** der axiale Abstand (16) zwischen äußerem Umformwerkzeug (2) und spanabhebendem Werkzeug (15) einstellbar ist.

8. Vorrichtung (1) nach einem der vorigen Ansprüche,
**dadurch gekennzeichnet,**
**dass** der Wirkbereich des Umformwerkzeugs (2) in axialer Richtung im Bereich eines Endbereichs des inneren Umformwerkzeugs (3) angeordnet ist.

9. Verfahren zum Umformen eines hohlen und zumindest im Wesentlichen rotationssymmetrischen Werkstücks (4), wobei das Werkstück (4) relativ zu einem äußeren Umformwerkzeug (2) um eine Rotationsachse (X), die zumindest in etwa seiner Symmetrieachse entspricht, in Rotation versetzt wird, wobei das äußere Umformwerkzeug (2) an einer Außenkontur (10) des Werkstücks (4) angreift und durch das Ausüben einer Umformkraft auf die Außenkontur (10) des Werkstücks (4) das Werkstück (4) plastisch verformt, wobei sich das Werkstück (4) mit seiner Innenkontur an einem inneren Umformwerkzeug (3) abstützt, wobei das Werkstück (4) eine Vorschubbewegung parallel zur Rotationsachse relativ zum äußeren Umformwerkzeug (2) ausführt,
**dadurch gekennzeichnet,**
**dass** während der Umformung eine spanabhebende Bearbeitung eines noch umzuformenden Bereichs des Werkstücks (4) erfolgt.

10. Verfahren nach Anspruch 9,
**dadurch gekennzeichnet,**
**dass** sich durch die Überlagerung der Rotation und der Vorschubbewegung eine spiralförmige Bahn ergibt, entlang der das äußere Umformwerkzeug (2) an dem Werkstück (4) angreift.

11. Verfahren nach Anspruch 9 oder 10,
**dadurch gekennzeichnet,**
**dass** zumindest bei der Umformung eines axialen Abschnitts des Werkstücks (4) die spanabhebende Bearbeitung mit einem über den Umfang des Werkstücks (4) ungleich verteilten Materialabtrag erfolgt.

12. Verfahren nach einem der Ansprüche 9 bis 11,
**dadurch gekennzeichnet,**
**dass** durch die spanabhebende Bearbeitung eine Exzentrizität der Außenkontur (10) des Werkstücks (4) relativ zur Rotationsachse (X) beseitigt wird.

13. Verfahren nach einem der Ansprüche 9 bis 12,
**dadurch gekennzeichnet,**
**dass** zunächst ein axialer Bereich, vorzugsweise ein Endbereich des Werkstücks, mit dem Umformwerkzeug derart verformt wird, dass der umgeformte Bereich mit seiner Innenkontur an dem inneren Umformwerkzeug (3) zur Anlage kommt, bevor mit der spanabhebenden Bearbeitung begonnen wird.

14. Verfahren nach einem der Ansprüche 9 bis 13,
**dadurch gekennzeichnet,**
**dass** das Werkstück (4) durch eine Vorschubbewegung in axialer Richtung über einen Endbereich des inneren Umformwerkzeugs (3) hinaus verschoben wird.

15. Verfahren nach einem der Ansprüche 9 bis 14,
**dadurch gekennzeichnet,**
**dass** durch die plastische Verformung die Länge des Werkstücks (4) in axialer Richtung zunimmt.

16. Verfahren nach einem der Ansprüche 9 bis 15,
**dadurch gekennzeichnet,**
**dass** durch die plastische Verformung die Wandstärke (7, 8) des Werkstücks (4), der Umfang der Außenkontur (10) des Werkstücks (4) und/oder der Umfang der Innenkontur des Werkstücks (4) reduziert wird.

## Claims

1. Device (1) for forming a hollow and at least substantially rotationally symmetrical workpiece (4), comprising an inner forming tool (3) for supporting an internal contour of the workpiece (4) and an outer forming tool I2) for introducing a forming force into an outer contour (10) of the workpiece (4), wherein the workpiece (4) is rotatable about an axis of rotation (X) relative to the outer forming tool (2), **characterised in that**
the device (1) has a machine cutting tool (15) and is configured so that the machine cutting tool (15) can engage on the outer contour (10) of the workpiece (4) at the same time as the forming tool (2).

2. Device (1) according to claim 1
**characterised in that**
the forming tool (2) comprises a forming roller.

3. Device (1) according to claim 1 or 2
**characterised in that**
the forming tool (2), more particularly the forming roller, has a surface for transferring the forming forces to the workpiece (4) which (surface) is configured such that the axial movement of the workpiece (4) relative to the outer forming tool (2) causes increasing displacement of the material of the workpiece (4|) towards the inner forming tool (3).

4. Device (1) according to one of the preceding claims
**characterised in that**
the device (1) comprises a plurality of outer forming tools (2), preferably arranged opposite the inner forming tool (3).

5. Device (1) according to one of the preceding claims,
**characterised in that**
the device (1) has a material suction device for the suction removal of the chippings which arise on the machine cutting tool (15).

6. Device (1) according to one of the preceding claims,
**characterised in that**
the device (1) has a cooling device for applying a cooling medium in the active region of the forming tool and/or the machine cutting tool.

7. Device (1) according to one of the preceding claims
**characterised in that**
the axial spacing (16) between the outer forming tool (2) and the machine cutting tool (15) is adjustable.

8. Device (1) according to one of the preceding claims
**characterised in that**
the active region of the forming tool (2) is arranged in the axial direction in the region of an end area of the inner forming tool (3).

9. Method for forming a hollow and at least substantially rotationally symmetrical workpiece (4) wherein the workpiece (4) is set in rotation relative to an outer forming tool (2) about an axis of rotation (X) which corresponds at least approximately to its axis of symmetry, wherein the outer forming tool (2) engages on an outer contour (10) of the workpiece (4) and by exerting a forming force on the outer contour (10) of the workpiece (4) plastically deforms the workpiece (4), wherein the workpiece (4) is supported with its inner contour on an inner forming tool (3) wherein the workpiece (4) executes an advancing movement parallel to the axis of rotation relative to the e outer forming tool (2),
**characterised in that**
during the forming process a machine cutting of an area of the workpiece (4) still to be formed is carried out.

10. Method according to claim 9
**characterised in that**
by superimposing the rotation and the advancing movement a spiral-shaped path is produced along which the outer forming tool (2) engages on the workpiece (4).

11. Method according to claim 9 or 10
**characterised in that**
at least during the forming of an axial section of the workpiece (4) the machine cutting is carried out with material removal spread unevenly over the periphery of the workpiece (4).

12. Method according to one of claims 9 to 11
**characterised in that**
through the machine cutting an eccentricity of the outer contour (10) of the workpiece (4) relative to the axis of rotation (X) is avoided.

13. Method according to one of claims 9 to 12
**characterised in that**
first an axial area, preferably an end area of the workpiece, is deformed with the forming tool such that the formed area comes to bear with its inner contour against the inner forming tool (3) before the machine cutting is started.

14. Method according to one of claims 9 to 13
**characterised in that**
the workpiece (4) is displaced by an advancing movement in the axial direction beyond an end region of the inner forming tool (3).

15. Method according to one of claims 9 to 14
**characterised in that**
the length of the workpiece (4) increases in the axial direction through the plastic deformation.

16. Method according to one of claims 9 to 15
**characterised in that**
the wall thickness (7,8) of the workpiece (4), the periphery of the outer contour (10) of the workpiece (4) and/or the periphery of the inner contour of the workpiece (4) is reduced through the plastic deformation.

## Revendications

1. Dispositif (1) destiné à former une pièce à usiner (4), creuse et sensiblement symétrique en rotation, avec un outil de formage intérieur (3), destiné à soutenir un contour intérieur de la pièce à usiner (4), et avec un outil de formage extérieur (2), destiné à initialiser une force de formage dans un contour extérieur (10) de la pièce à usiner (4), sachant que la pièce à usiner (4) peut tourner autour d'un axe de rotation (X) par rapport l'outil de formage extérieur (2),
**caractérisé en ce que**
la dispositif (1) présente un outil d'usinage par enlèvement de copaux (15) est st conçu de telle manière que ledit outil d'usinage par enlèvement de copaux (15) puisse attaquer le contour extérieur (10) de la pièce à usiner (4) en même temps que l'outil de formage extérieur (2).

2. Dispositif (1) selon la revendication 1,
**caractérisé en ce que**
l'outil de formage extérieur (2) présente un rouleau de formage.

3. Dispositif (1) selon revendication 1 ou 2,
**caractérisé en ce que**,
pour la transmission de forces de formage sur la pièce à usiner (4), l'outil de formage extérieur (2), en particulier le rouleau de formage, présente une surface conçue de telle manière que le mouvement axial, exécuté par la pièce à usiner (4) par rapport à l'outil de formage extérieur (2), donne lieu à un refoulement croissant du matériaux de la pièce à usiner (4) vers l'outil de formage intérieur (3).

4. Dispositif (1) selon l'une des revendications précédentes,
**caractérisé en ce que**
le dispositif (1) présente une pluralité d'outils de formage extérieurs (2), qui, de préférence, sont disposés à l'opposé par rapport à l'outil de formage intérieur (3).

5. Dispositif (1) selon l'une des revendications précédentes,
**caractérisé en ce que**
le dispositif (1) présente un dispositif d'aspiration de copeaux, destinée à aspirer les copeaux provenant de l'outil d'usinage par enlèvement de copaux (15).

6. Dispositif (1) selon l'une des revendications précédentes,
**caractérisé en ce que**
le dispositif (1) présente une système de réfrigérant pour l'application d'un réfrigérant dans le domaine d'action de l'outil de formage et / ou de l'outil d'usinage par enlèvement de copaux.

7. Dispositif (1) selon l'une des revendications précédentes,
**caractérisé en ce que**
la distance axiale (16) entre l'outil de formage extérieur (2) et l'outil d'usinage par enlèvement de copaux (15) peut être réglé.

8. Dispositif (1) selon l'une des revendications précédentes,
**caractérisé en ce que**
le domaine d'action de l'outil de formage extérieur (2) dans la direction axiale est situé dans le secteur d'une zone finale de l'outil de formage intérieur (3).

9. Procédé de formage d'une pièce à usiner (4) creuse et, au moins sensiblement, symétrique en rotation, la pièce à usiner (4) étant mise en rotation par rapport à un outil de formage extérieur (2), autour d'un axe de rotation (X) qui correspond, au moins approximativement, à son axe de symétrie, sachant que l'outil de formage extérieur (2) attaque un contour extérieur (10) de la pièce à usiner (4) et forme plastiquement ladite pièce à usiner (4) par l'exercice d'une force de déformation sur le contour extérieur (10) de la pièce à usiner (4), sachant que la pièce à usiner (4) s'appuie, avec son contour intérieur, sur un outil de formage intérieur (3), la pièce à usiner (4) exécutant, par rapport à l'outil de formage extérieur (2), un mouvement d'avancement parallèlement à l'axe de rotation,
**caractérisé en ce que**,
pendant le formage, un usinage par enlèvement de copeaux de la zone de la pièce à usiner (4) à former est exécuté.

10. Procédé selon la revendication 9,
**caractérisé en ce que**,
la superposition de la rotation et du mouvement d'avancement génère une voie en forme de spirale, le long de laquelle l'outil de formage extérieur (2) attaque la pièce à usiner (4).

11. Procédé selon revendication 9 ou 10,
**caractérisé en ce que**,
au moins lors de la déformation d'une section axiale de la pièce à usiner (4), l'usinage par enlèvement de copeaux est effectué avec un enlèvement de matériau réparti irrégulièrement sur la circonférence de la pièce à usiner (4).

12. Procédé selon l'une des revendications 9 à 11,
**caractérisé en ce que**,
lors de l'usinage par enlèvement de copeaux, une excentricité du contour extérieur (10) de la pièce à usiner (4) par rapport à l'axe de rotation (X) est éliminée.

13. Procédé selon l'une des revendications 9 à 12,
**caractérisé en ce que**,
d'abord, une zone axiale de la pièce à usiner, de préférence une zone finale, est déformée avec l'outil de formage de telle manière que ladite zone formée vienne porter, avec son contour intérieur, contre l'outil de formage intérieur (3), avant que commence l'usinage par enlèvement de copeaux.

14. Procédé selon l'une des revendications 9 à 13,
**caractérisé en ce que**
la pièce à usiner (4) est poussée au-delà d'une zone finale de l'outil de formage intérieur (3) par un mouvement d'avancement dans la direction axiale.

15. Procédé selon l'une des revendications 9 à 14,
**caractérisé en ce que**,
par la déformation plastique, la longueur de la pièce à usiner (4) augment dans la direction axiale.

16. Procédé selon l'une des revendications 9 à 15,
**caractérisé en ce que**,
par la déformation plastique, l'épaisseur de la paroi (7, 8) de la pièce à usiner (4), le périmètre du contour extérieur (10) de la pièce à usiner (4) et / ou le périmètre du contour intérieur de la pièce à usiner (4) sont réduits.
